# EUROPÄISCHE PATENTSCHRIFT

(11) **EP 0 531 686 B1**
(45) Veröffentlichungstag und Bekanntmachung des Hinweises auf die Patenterteilung: **22.01.1997**
(21) Anmeldenummer: 92112751.0
(22) Anmeldetag: 25.07.1992
(51) Int. Cl.: B60R 1/08

(54) **Abblendbarer Innenrückblickspiegel für Kraftfahrzeuge**
Day-night internal rearview mirror for motor vehicles
Rétroviseur intérieur jour-nuit pour véhicules automobiles

(30) Priorität: 07.09.1991 DE 9111108 U
(43) Veröffentlichungstag der Anmeldung: 17.03.1993
(73) Patentinhaber: Magna Reflex Holding GmbH, 97959 Assamstadt (DE)
(72) Erfinder: Sobolewski, Helmut, W-7144 Asperg (DE)
(74) Vertreter: Patentanwälte Bartels, Held und Partner

(56) Entgegenhaltungen:
- DE-A- 4 017 619
- DE-B- 1 203 145
- DE-B- 2 210 813
- US-A- 2 913 958
- US-A- 4 826 289

## Beschreibung

Die Erfindung betrifft einen abblendbaren Innenrückspiegel für Kraftfahrzeuge, der die Merkmale des Oberbegriffs des Anspruches 1 aufweist.

Spiegel dieser Art sind bekannt, vergl. DE-A-4 017 619. Bei derartigen abblendbaren Spiegeln besteht die Gefahr, daß es zu einer ungewollten, also nicht durch Verstellen des Kipphebels bewirkten Umstellung von der Normalstellung auf die Abblendstellung oder umgekehrt kommen kann, wenn eine äußere Krafteinwirkung auf das Gehäuse im Sinne einer Schwenkung desselben ausgeübt wird, beispielsweise durch ein versehentliches Anstoßen des Fahrers. Wird hierbei die Feder so weit gespannt, daß sie ihre Totpunktlage erreicht und überschreitet, dann wird der Kipphebel in seine andere Endstellung geschwenkt. Ein solches ungewolltes Umstellen des Spiegels infolge einer äußeren Krafteinwirkung auf das Spiegelgehäuse kann bei den bekannten Spiegeln nur erschwert werden, indem die Federkraft erhöht wird, die bei einer Umstellung überwunden werden muß. Bei ausreichend groß gewählter Federkraft besteht aber die Gefahr, daß sich die von der Federkraft belasteten Kunststoffteile des Spiegels, insbesondere bei hohen Temperaturen, deformieren.

Der Erfindung liegt die Aufgabe zugrunde, einen abblendbaren Rückblickspiegel für Kraftfahrzeuge zu schaffen, der die erwähnte Gefahr einer Deformation von Materialpartien seiner Kunststoffteile ausschließt und dennoch zuverlässig eine ungewollte Umstellung von der Normalstellung in die Abblendstellung und umgekehrt ausschließt, ohne hierfür eine aufwendige Bauweise zu erfordern. Diese Aufgabe löst erfindungsgemäß ein Innenrückblickspiegel mit den Merkmalen des Anspruches 1.

Dadurch, daß erfindungsgemäß die Anordnung so getroffen ist, daß bei einem durch äußere Krafteinwirkung erfolgenden Schwenken des Tragrahmens über den gesamten, durch Anschläge begrenzten Schwenkbereich die Totpunktlage der Feder nicht erreicht werden kann, führt ein ungewolltes Schwenken nicht zu einer Umstellung der Einstellage des Kipphebels. Dieser kehrt vielmehr bei Beendigung der äußeren Krafteinwirkung auf den Tragrahmen wieder in seine Ausgangslage zurück. Bei der Erfindung braucht daher die Vorspannung der Feder nur so groß gewählt zu sein, daß sie eine spielfreie Anlage des Tragrahmens an den den Schwenkbereich begrenzenden Anschlägen bei beiden Spiegeleinstellungen gewährleistet. Somit können selbst bei hohen Temperaturen keine Deformationen der aus Kunststoff bestehenden, von der Federkraft belasteten Werkstoffpartien auftreten. Von besonderem Vorteil ist, daß die erfindungsgemäße Lösung nur einen relativ geringen Aufwand erfordert, weil die Feder auch den Tragrahmen in der Lagerung des Halters zu halten vermag, so daß diese Lagerung offen ausgeführt sein kann, was die Montage vereinfacht.

Zur Bildung der festen Verbindung zwischen Halter und Feder können die Schenkelenden beispielsweise in Bohrungen des Halters liegen, die radial bezüglich der Schwenkachse des Halters verlaufen und auf der dem Kipphebel zugewandten Seite des Halters eine Mündungsöffnung haben. Um dabei in einfacher Weise die Feder montieren und im Halter festlegen zu können, sind die Schenkelenden in den Bohrungen zurückgebogen, so daß ihre freien Enden an einer Raste der Bohrung Anschlag finden und dadurch ein Herausziehen aus der Bohrung unmöglich machen. Die Schenkelenden brauchen deshalb nur in die Bohrungen eingesteckt zu werden. Da außerdem der Stegteil der Feder nur in ein offenes Lagerbett des Kipphebels eingelegt zu werden braucht und auch die Lagerung des Tragrahmens am Halter als ein offenes Lagerbett ausgebildet sein kann, weil die Feder in der Lage ist, diese Lagerung zuverlässig aufrechtzuerhalten, ist die Montage des erfindungsgemäßen Innenrückblickspiegels äußerst einfach und damit kostengünstig.

Die Erfindung ist in der folgenden Beschreibung eines Ausführungsbeispiels im einzelnen erläutert. Bei dem dargestellten Ausführungsbeispiel ist der Tragrahmen für den Spiegelschichtträger als Gehäuse ausgebildet, das den Halter umfaßt und in dem der Kipphebel um die Kipphebelachse schwenkbar gelagert ist.

Die Erfindung betrifft jedoch auch eine nicht dargestellte Ausführungsform eines Innenrückblickspiegels, bei dem der Halter als Gehäuse ausgebildet ist, in dem der Tragrahmen für den Spiegelschichtträger und der Kipphebel gelagert sind. Es zeigen
- Fig. 1: die Ansicht der offenen Seite des als Gehäuse ausgebildeten Tragrahmens, die vom in der Zeichnung weggelassenen Spiegelschichtträger geschlossen wird,
- Fig. 2+3: vergrößert dargestellte Schnitte nach den Linien II-II bzw. III-III in Fig. 1, wobei in Fig. 2 der Spiegelschichtträger dargestellt ist.

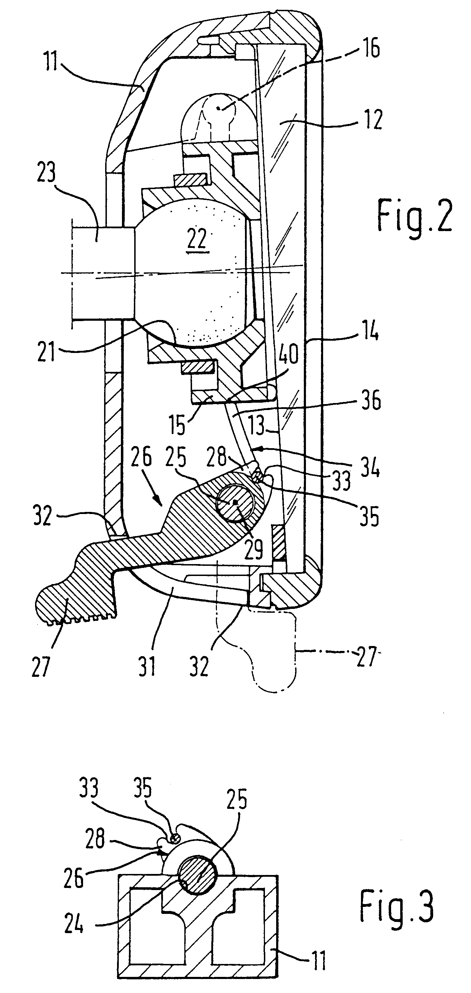

Der in der Zeichnung dargestellte Innenrückblickspiegel für Kraftfahrzeuge weist einen als Gehäuse ausgebildeten Tragrahmen 11 für einen Spiegelschichtträger 12 auf, der in der Draufsicht im wesentlichen rechteckig ausgebildet ist und in seinem zu den kürzeren Rechteckseiten parallelen, in Fig. 2 dargestellten Schnitt sich keilförmig nach unten verjüngt, so daß die dem Tragrahmen 11 zugekehrte, die (in der Zeichnung nicht dargestellte) Spiegelschicht tragende Fläche 13 mit der vorderen Fläche 14 des durchsichtigen Spiegelschichtträgers 12 einen Winkel bildet.

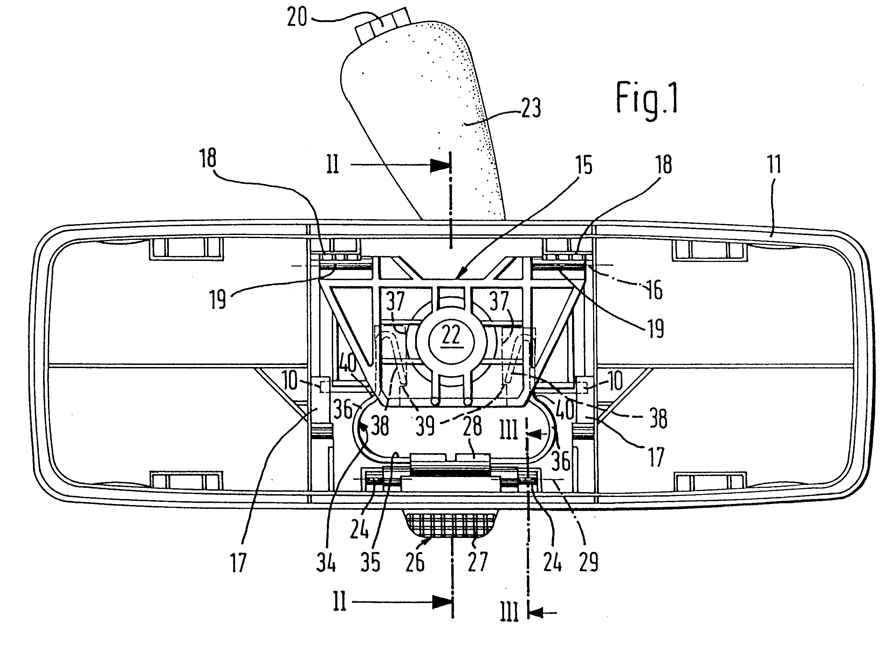

Der Tragrahmen 11 ist an einem Halter 15 um eine Spiegelschwenkachse 16 schwenkbar gelagert, wobei der Schwenkbereich durch zwei Paare von Anschlägen 17 (Fig. 1) des Tragrahmens 11 und zwei zapfenförmige Anschläge 10 des Halters 15 begrenzt ist, die zwischen die Anschläge 17 des einen bzw. anderen Paares eingreifen. In Fig. 1 ist nur der eine Anschlag 17 jedes Paares sichtbar.

Das Lager für die Spiegelschwenkachse 16 besteht aus zwei in Fig. 1 nach unten offenen Lagerbetten 18, in die Lagerzapfen 19 des Halters 15 eingreifen. Die jedem der zapfenförmigen Anschläge 10 zugekehrten Flächen der Anschläge 17 begrenzen einen sich in Richtung von der Spiegelschwenkachse 16 weg verjüngenden, z. B. keilförmigen Raum, wodurch ein Herausheben der Lagerzapfen 19 aus den Lagerbetten 18 erschwert wird. Der Halter 15 weist ein kalottenförmiges Lager 21 für eine Kugel 22 auf, die an dem einen Ende eines Trägers 23 vorgesehen ist, der mittels einer Rasteinrichtung 20 mit dem Fahrzeug verbindbar ist. Die Kugel 22 ist mit einer so großen Reibung im Lager 21 gehalten, daß der Tragrahmen 11 von Hand um den Kugelmittelpunkt geschwenkt werden kann, aber in der gewählten Stellung durch die Reibung so festgehalten wird, daß er durch die beim Fahren auftretenden Erschütterungen seine Stellung gegenüber dem Fahrzeug nicht verändert.

Der Tragrahmen 11 weist auf der den Lagerbetten 18 gegenüberliegenden Seite seines Hohlraumes zwei weitere, in Fig. 1 nach oben offene Lagerbetten 24 für Lagerzapfen 25 eines Kipphebels 26 auf, der einen von Hand betätigbaren Betätigungsarm 27 und einen Schaltarm 28 aufweist, die sich in diametrale Richtungen von der von den Lagerzapfen 25 gebildeten Kipphebelschwenkachse 29 weg erstrecken. Der Betätigungsarm 27 erstreckt sich durch eine Aussparung 31 des gehäuseartigen Tragrahmens 11 nach außen. Die Ränder der Aussparung 31 bilden Anschläge 32 für den Betätigungsarm 27 des Kipphebels 26. An seinem freien Ende bildet der Schaltarm 28 ein radial nach außen offenes Lagerbett 33.

Eine als U-artiger Bügel ausgebildete Feder 34 greift mit ihrem Steg 35 in das vom Schaltarm 28 des Kipphebels 26 gebildete Lagerbett 33 und mit den Enden ihrer Schenkel 36 in Bohrungen 37 des Halters 15 ein, die radial bezüglich der Spiegelschwenkachse 16 im Halter 15 verlaufen und in dessen dem Kipphebel 26 zugewandter Fläche eine Mündungsöffnung haben. Die Schenkel 36 erfahren deshalb insbesondere in dem mit 40 gekennzeichneten Abschnitt eine Biegebeanspruchung. Die äußersten Enden 38 der Schenkel 36 sind für die Zusammenwirkung mit in den Bohrungen 37 vorgesehenen Rasten nach hinten umgebogen.

Die Feder 34 ist in beiden Endstellungen sowohl des Kipphebels 26 als auch des Halters 15, die ebenso wie der Tragrahmen 11 aus Kunststoff bestehen, vorgespannt, damit eine sichere Anlage an den Anschlägen gewährleistet ist. Wird der Kipphebel 26 manuell in seine andere Endstellung geschwenkt, dann erhöht sich zunächst die Vorspannung der Feder 34, und zwar auch dadurch, daß sich der Abstand zwischen dem Lagerbett 33 und dem ihm zugekehrten Ende des Halters 15 verringert, bis eine Totpunktlage erreicht ist, in welcher die Feder 34 ihre maximale Vorspannung hat. Sobald diese Totpunktlage überschritten wird, springt der Kipphebel 26 durch die Kraft der Feder 34 in seine andere Endstellung.

Der Schwenkbereich des Tragrahmens 11 bezüglich des Schwenkbereiches des Kipphebels 26 sowie der Abstand der in den Abschnitten 40 gebildeten Federgelenke der Feder 34 von der Spiegelschwenkachse sind so gewählt, daß dann, wenn der Tragrahmen direkt, also nicht mittels des Kipphebels 26, z.B. durch ein versehentliches Anstoßen des Fahrers, aus der einen in die andere Endstellung geschwenkt wird, die durch die Abschnitte 40 gebildeten Federgelenke nur einen so kleinen Weg beschreiben, daß die durch die Feder 34 bewirkte Schwenkung des Kipphebels 26 nicht ausreicht, um den Kipphebel 26 und die Feder 34 bis zur Totpunktlage zu bewegen. Dadurch ist sichergestellt, daß der Spiegel nicht ungewollt von der Normalstellung in die Abblendstellung und umgekehrt kippen kann, und zwar selbst bei einer relativ geringen Vorspannung der Feder 34, und daß der Tragrahmen 11 immer sicher in die mit dem Kipphebel 26 eingestellte Endstellung zurückbewegt wird. Die hierzu erforderliche geringe Vorspannung hat nicht nur den Vorteil, daß zum Betätigen des Kipphebels eine geringe Kraft erforderlich ist, sondern auch, daß die Dauerbelastung der unter Kraft der Feder stehenden Werkstoffpartien so gering gehalten werden kann, daß eine Verformung selbst bei hohen Umgebungstemperaturen und einer relativ schwachen Dimensionierung dieser Werkstoffpartien vermieden wird.

Beim Zusammenbau des oben beschriebenen Innenrückblickspiegels wird zunächst die Feder 34 mit den Enden ihrer Schenkel in die Bohrungen 37 des Halters 15 so tief hineingesteckt, daß die äußersten Schenkelenden 28 hinter die Rasten 39 einschnappen. Dann wird der Tragrahmen 11 durch Einschieben des Halters 15 zwischen die Anschläge der Anschlagpaare 17 und durch Einsetzen der Lagerzapfen 19 in die Lagerbetten 18 mit dem Halter 15 verbunden. Jetzt muß nur noch durch Spannen der Feder 34 ihr Steg 35 in das Lagerbett 33 des Schaltarmes 28 des Kipphebels 26 eingesetzt werden, um eine Verbindung des Tragrahmens 11 mit dem Halter 15 zu erreichen. Hierbei hält dann die Vorspannung der Feder 34 in Zusammenwirkung mit den Anschlägen 10, 17 und 32 den Tragrahmen 11 bzw. den Kipphebel 26 in den beiden Stellungen des Tragrahmens 1 spielfrei fest.

Es ist auch offensichtlich, daß anstelle der bügelförmigen Feder 34 auch eine beliebige andere Feder, z. B. eine Bandfeder oder eine Stabfeder, verwendet werden kann, die durch leichtes Biegen so vorgespannt ist, daß sie in den beiden Endstellungen des Kipphebels 26 sowohl den Kipphebel selbst als auch den Tragrahmen 11 spielfrei mit dem Halter verbindet.

Die vorstehende Beschreibung und die Zeichnungen beschränken sich nur auf die Angaben, die für die beispielsweise Verkörperung der Erfindung wesentlich sind.

## Patentansprüche

1. Abblendbarer Innenrückblickspiegel für Kraftfahrzeuge mit
a) einem Bauteil, das einen Tragrahmen (11) für einen Spiegelschichtträger (12) bildet,
b) einem Halter (15), der einstellbar von einem mit dem Fahrzeug zu verbindenden Träger (23) getragen ist und an dem um eine Achse (16) schwenkbar das Bauteil gelagert ist,
c) einem am Bauteil schwenkbar gelagerten Kipphebel (26) und
d) einer vorgespannten Schenkelfeder (34), über die das Bauteil mit dem Halter (15) derart verbunden ist, daß die Feder (34) in beiden Endstellungen des Tragrahmens (11) und des Kipphebels (26) ein der Bewegung in die andere Endstellung entgegenwirkendes Drehmoment ausübt und bei einer Kippbewegung des Kipphebels (26) von seiner einen in seine andere Endstellung durch ihre Totpunktlage hindurch bewegt wird, in der sie ihre maximale Vorspannung hat,
dadurch gekennzeichnet, daß die Feder (34) als ein im wesentlichen U-artiger Bügel ausgebildet ist, dessen Schenke mit dem Halter (15) fest und dessen Steg (35) mit dem Kipphebel (26) gelenkig verbunden sind, so daß die zwischen Kipphebel (26) und Halter (15) verlaufenden Schenkeabschnitte (40) der Feder (34) Federgelenke bilden, und daß deren Abstand von der Spiegelschwenkachse (16) und der durch Anschläge (10) am Halter (15) und Anschläge (17) des Tragrahmens (11) begrenzte Schwenkbereich des Tragrahmens (11) beide so gewählt sind, daß der bei einem Schwenken des Tragrahmens (11) erreichbare Schwenkwinkel kleiner ist als der für ein Erreichen der Totpunktlage der Feder (34) und des Kipphebels (26) erforderliche Schwenkwinkel.

2. Spiegel nach Anspruch 1, dadurch gekennzeichnet, daß die gelenkige Verbindung mit dem Kipphebel (26) durch den Einghriff des parallel zur Schwenkachse (29) des Kipphebels (26) und des Halters (15) verlaufenden Steges (35) der Feder (34) in ein offenes Lagerbett (33) des Kipphebels (26) gebildet ist.

3. Spiegel nach Anspruch 1 oder 2, dadurch gekennzeichnet, daß die Schenkelenden der Feder (34) in Bohrungen (37) des Halters (15) liegen, die radial bezüglich der Schwenkachse (16) des Halters (15) verlaufen und auf der dem Kipphebel (26) zugewandten Seite des Halters (15) eine Mündungsöffnung haben.

4. Spiegel nach Anspruch 3, dadurch gekennzeichnet, daß die Schenkelenden in den Bohrungen (37) zurückgebogen sind und ihr freies Ende an einer Raste (39) der Bohrung (37) Anschlag findet.

5. Spiegel nach einem der Ansprüche 1 bis 4, dadurch gekennzeichnet, daß die Spiegelschwenkachse (16) durch zwei Zapfen (19) gebildet ist, die in Lagerbetten (18) eingreifen, welche in Richtung zur Feder (34) hin offen sind.

6. Spiegel nach einem der Ansprüche 1 bis 5, dadurch gekennzeichnet, daß die den Anschlägen (10) am Halter (15) zugekehrten Flächen der Anschläge (17) des Tragrahmens (11) einen sich zur Spiegelschwenkachse (16) hin verjüngenden Raum begrenzen.

7. Spiegel nach einem der Ansprüche 1 bis 6, dadurch gekennzeichnet, daß der Kipphebel (26) im Tragrahmen (11) gelagert ist, der als Gehäuse den Halter (15) umfaßt.

## Claims

1. Anti-dazzle internal rear-view mirror for motor vehicles having
a) a component which forms a support frame (11) for a mirror layer carrier (12);
b) a holder (15) which is carried in an adjustable manner by a support (23) to be connected to the vehicle and on which holder the component is mounted to be pivotable about an axis (16);
c) a tilting lever (26) which is pivotably mounted on the component; and
d) a biased leg spring (34) by means of which the component is connected to the holder (15) in such a manner that the spring (34), in both end positions of the support frame (11) and of the tilting lever (26), exerts a torque opposing the movement into the other end position and, if the tilting lever (26) is tilted from one end position into its other end position, is moved through its dead centre position in which it has its maximum bias,
characterised in that the spring (34) is in the form of a substantially U-like bow, the legs of which are connected rigidly to the holder (15) and the bridge (35) of which is articulated to the tilting lever (26), so that the leg portions (40) of the spring (34) which extend between the tilting lever (26) and the holder (15) form spring articulations, and that the spacing thereof from the mirror pivot axis (16) and the pivot range of the support frame (11) delimited by stops (10) on the holder (15) and stops (17) on the support frame (11) are both so selected that the pivot angle which can be obtained when the support frame (11) is pivoted is smaller than the pivot angle necessary to reach the dead centre position of the spring (34) and of the tilting lever (26).

2. Mirror according to Claim 1, characterised in that the articulation to the tilting lever (26) is formed by the engagement of the bridge (35) of the spring (34) in an open bearing bed (33) of the tilting lever (26), the bridge extending parallel to the pivot axis (29) of the tilting lever (26) and of the holder (15).

3. Mirror according to Claim 1 or 2, characterised in that the leg ends of the spring (34) lie in bores (37) in the holder (15) which extend radially relative to the pivot axis (16) of the holder (15) and which have a mouth opening on that side of the holder (15) which faces the tilting lever (26).

4. Mirror according to Claim 3, characterised in that the leg ends are bent back into the bores (37) and their free end finds a stop at a catch (39) of the bore (37).

5. Mirror according to any one of Claims 1 to 4, characterised in that the mirror pivot axis (16) is formed by two pins (19) which engage in bearing beds (18) which are open in the direction towards the spring (34).

6. Mirror according to any one of Claims 1 to 5, characterised in that those faces of the stops (17) of the support frame (11) which face the stops (10) on the holder (15) delimit a space which tapers towards the mirror pivot axis (16).

7. Mirror according to any one of Claims 1 to 6, characterised in that the tilting lever (26) is mounted in the support frame (11) which comprises, as housing, the holder (15).

## Revendications

1. Rétroviseur jour-nuit pour véhicules automobiles, comprenant :
a) un élément qui forme un cadre porteur (11) pour un support de couche réfléchissante (12),
b) une monture (15) qui est portée de façon réglable par un support (23) destiné à être fixé au véhicule et sur lequel l'élément est monté tourillonnant pour pouvoir pivoter autour d'un axe (16),
c) un levier basculant (26) monté pivotant sur l'élément et
d) un ressort à branches précontraint (34) par l'intermédiaire duquel l'élément est relié à la monture (15) de telle manière que, dans les deux positions extrêmes du cadre porteur (11) et du levier basculant (26), le ressort (34) exerce un couple résistant au mouvement vers l'autre position extrême, et, en réponse à un mouvement de basculement du levier basculant (26), soit amené de l'une de ses positions extrême à son autre position extrême en franchissant sa position de point mort, dans laquelle il présente sa précontrainte maximale,
caractérisé en ce que le ressort (34) est constitué par un arceau sensiblement en forme de U dont les branches sont reliées solidement à la monture (15) et dont l'anse (35) s'articule sur le levier basculant (15), de sorte que les segments (40) des branches du ressort (34) qui s'étendent entre le levier basculant (26) et la monture (15) forment des articulations élastiques et en ce que la distance qui les sépare de l'axe de pivotement (16) du rétroviseur et la plage de pivotement du cadre porteur (11), qui est limitée par des butées (10) portées par la monture (15) et par des butées (17) du cadre porteur (11), sont choisies de manière que l'angle de pivotement qui peut être atteint lors d'un pivotement du cadre porteur (11) soit plus petit que l'angle de pivotement nécessaire pour atteindre la position de point mort du ressort (34) et du levier basculant (26).

2. Rétroviseur selon la revendication 1, caractérisé en ce que la liaison articulée avec le levier basculant (26) est formée par l'engagement de l'anse (35) du ressort (34), qui s'étend parallèlement à l'axe de pivotement (29) du levier basculant (26) et de la monture (15), dans une cuvette de portée ouverte (33) du levier basculant (26).

3. Rétroviseur selon la revendication 1 ou 2, caractérisé en ce que les extrémités des branches du ressort (34) sont logées dans des perçages (37) de la monture (15) qui s'étendent radialement par rapport à l'axe de pivotement (16) de la monture (15) et possèdent une ouverture de débouché sur le côté de la monture (15) qui est dirigé vers le levier basculant (26).

4. Rétroviseur selon la revendication 3, caractérisé en ce que les extrémités des branches sont repliées en arrière dans les perçages (37) et que leur extrémité libre bute contre un arrêt (39) du perçage (37).

5. Rétroviseur selon l'une des revendications 1 à 4, caractérisé en ce que l'axe (16) de pivotement du rétroviseur est formé par deux tourillons (19) qui sont engagés dans des cuvettes de portée (18) qui sont ouvertes en direction du ressort (34).

6. Rétroviseur selon l'une des revendications 1 à 4, caractérisé en ce que les surfaces des butées (17) du cadre porteur (11) qui sont dirigées vers les butées (10) portées par la monture (15) délimitent un espace qui se rétrécit en direction de l'axe de pivotement (16) du rétroviseur.

7. Rétroviseur selon l'une des revendications 1 à 6, caractérisé en ce que le levier basculant (26) tourillonne dans le cadre porteur (11) qui enveloppe la monture (15) à la façon d'un boîtier.
